# EUROPEAN PATENT SPECIFICATION

(11) **EP 1 813 029 B1**
(45) Date of publication and mention of the grant of the patent: **22.04.2009**
(21) Application number: 05848174.8
(22) Date of filing: 10.11.2005
(51) Int. Cl.: H04B 1/40

(54) **TIMING SYSTEM AND METHOD FOR A WIRELESS TRANSCEIVER SYSTEM**
ZEITSYSTEM UND VERFAHREN FÜR EIN DRAHTLOSES SENDEEMPFANGSSYSTEM
SYSTEME ET PROCEDE DE SYNCHRONISATION POUR UN SYSTEME D'EMETTEUR-RECEPTEUR SANS FIL

(30) Priority: 12.11.2004 US 627589 P
(43) Date of publication of application: 01.08.2007
(73) Proprietor: Analog Devices, Inc., Norwood, MA 02062-9106 (US)
(72) Inventor: BARBER, Thomas, Medford, MA 02155 (US); BIRK, Palle, DK-9260 Gistrup (DK); BOVE, Pier, Woburn, MA 01801 (US); YAN, Aiugo, North Andover, MA 01845 (US)
(74) Representative: Valea AB
(86) International application number: PCT/US2005/040820
(87) International publication number: WO 2006/053158

(56) References cited:
- EP-A- 1 187 353
- WO-A-00/55981
- DE-A1- 10 311 701
- US-A- 6 040 728

## Description

### BACKGROUND

The invention generally relates to wireless communication systems, and relates in particular to wireless transceiver systems for use in telecommunications.

Conventional wireless communications systems include one or more wireless transceivers, each wireless transceiver supporting a particular communications standard (or air interface). Each wireless transceiver typically includes a radio frequency circuit that converts baseband analog signals to radio frequency signals and communicates with a cellular network via an antenna. Each wireless transceiver also typically includes an analog baseband unit that converts the baseband analog signals to baseband digital signals. The wireless transceiver must communicate with a digital baseband processing system that includes one or more processors, either digital signal processors (DSPs) or micro-controller units (MCUs), for encoding/decoding the baseband digital data and controlling the timing of the wireless transceiver(s).

DE 103 11 701 concerns a transmission and reception device for an RF appliance which has a baseband component and an HF component which are connected via an interface for exchange of useful data in a transmission- and reception-device. The interface has a first differential unidirectional data link for transmission of digital useful data from the baseband component to the HF component. A second differential unidirectional data link is used to transmit digital useful data from the high frequency component to the baseband component after conversion in the high frequency component into the baseband and then digitalized.

WO 00/55981 relates to a transmitter-receiver with an HF receiver, especially a UHF receiver, comprising a digital signal unit in a digital part, an input part, at least one mixer and an intermediate frequency/base band processing unit, a local channel oscillator, to which a first phase control circuit with a phase discriminator and an adjustable first frequency transformer is assigned, and a reference oscillator for the phase control circuit and the control pulse clock of the digital signal processing unit, wherein a digital clock pulse synthesizer is provided for obtaining the control clock pulse, to which an output signal of the reference oscillator and a control signal from the digital part is fed in the form of a digital tuning word. The frequency of the reference oscillator is selected in such a way that its magnitude is at least the same as the size of the band width of one or several receiving bands used and none of their harmonic waves are located in a reception channel.

EP 1 187 353 discloses a transceiver-processor building block for implementation of radio systems, an example being used in an electronic radio system multifunction slice, includes several transceivers, a processor connected to the transceivers, and a local RF control bus coupled between the processor and the transceivers. A radio network bus is also provided and connected to the processor. The local RF control bus is inaccessible directly from outside the multifunction slice. In contrast, the radio network bus is accessible directly from outside the multifunction slice to allow "stacking" of multiple slices. The building block may also include an external control bus connected to the processor. An external control bus connector then provides direct accessibility to the external control bus from outside the multifunction slice.

US 6 040 728 describes an integrated circuit formed within a substrate which has a first circuit section and an active noise cancellation section located at least between the first circuit section and a noise source. The active noise cancellation section is coupled to the substrate and injects counter-charge into the substrate to isolate the first circuit section from noise produced by the noise source.

Wireless communications systems that support more than one mode (or standard) of operation typically include a plurality of wireless transceivers, each of which may need to be operated at a different clock frequency. While some systems may employ a plurality of separate clocks (e.g., crystals), such a solution may be too expensive with regard to manufacturing cost and circuit board real estate, so it is desirable to have the wireless communication system operate from a single clock

source. For a wireless communications system that support more than a single communications standard, a multi-mode wireless communications system, the system clock must be able to support the timing requirements of all of the multiple wireless interfaces in parallel as well as provide a reference clock for the digital baseband processing system. To support multiple communications standards, typically, the system clock must be run at the least common multiple of the reference clocks for all of the individual wireless interfaces. For example, a multi-mode wireless communication system supporting the 3GPP GSM and WCDMA (FDD) standards would require a 1.248Ghz clock to support both the GSM reference clock (13Mhz) and the WCDMA reference clock (3.84Mhz), using a single system clock. In most cases, the frequency of the single system clock is too high for use as the reference clock for the digital baseband processing system.

There is a need, therefore, for an efficient and economical timing system for use in a wireless communications system.

### SUMMARY

The invention provides a wireless communication system according to claim 1 and a method for operating a timing system according to claim 9.

### BRIEF DESCRIPTION OF THE DRAWINGS

The following description may be further understood with reference to the accompanying drawings in which:
Figure 1 shows an illustrative diagrammatic view of a wireless communications system in accordance with an embodiment of the invention;
Figure 2 shows an illustrative diagrammatic view of a timing diagram of the operation of a system as shown in Figure 1; and
Figure 3 shows an illustrative diagrammatic view of a timing diagram of the initialization of a system as shown in Figure 1;
The drawings are shown for illustrative purposes only.

### DETAILED DESCRIPTION OF THE ILLUSTRATED EMBODIMENTS

In accordance with an embodiment, the invention provides a timing system for a wireless communications system that employs a primary clock system for providing a primary clock signal that may be employed as the reference clock for a digital baseband processing system which generates low resolution timing signals and secondary clock systems that provide secondary clock signals that may be employed to generate high resolution timing signals synchronous to the air interface. The secondary clock systems are initialized by a low resolution timing signal but run at a higher frequency than the primary clock signal. The secondary clock signals may be asynchronous to the primary clock signal.

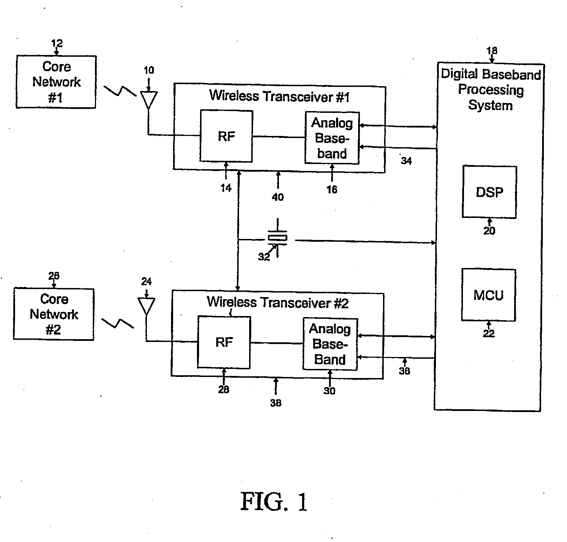

As shown in Figure 1, a wireless communications system in accordance with an embodiment of the invention includes a plurality of wireless transceivers 38, 40, each wireless transceiver supporting a particular communications standard (or air interface). Each wireless transceiver typically includes a radio frequency circuit 14, 28 that converts baseband analog signals to radio frequency signals and communicates with a cellular network 12, 26 via an antenna 10, 24. Each wireless transceiver 38, 40 also typically.includes an analog baseband unit 16, 30 that converts the baseband analog signals to baseband digital signals. The wireless transceivers must communicate with a digital baseband processing system 18 that includes one or more processors, either digital signal processors 20 or micro-controller units 22, for encoding/decoding the baseband digital data and controlling the timing of the wireless transceiver(s).

A single crystal 32 provides a primary clock signal that is used as the reference clock for the digital baseband processing unit 18 at a frequency of, for example about 26 MHz. The digital baseband processing unit 18 generates low resolution timing signals 34, 36 for each of the wireless transceivers 38, 40. In response to these low resolution timing signals, higher resolution timing signals are generated which are used to control the timing of the wireless transceiver.

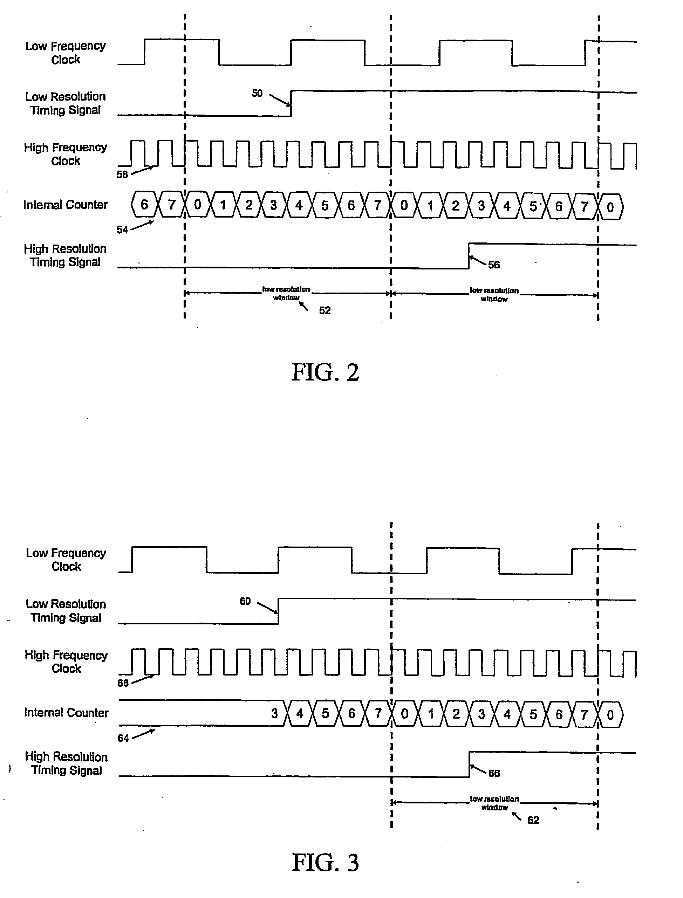

In particular, the digital baseband processing system 18 will place low resolution timing signal 50 within a known timing window 52 of a counter 54 within one of the wireless transceivers 38, 40. The wireless transceiver (38 or 40) will place a high resolution timing signal 56 that is synchronous with the high frequency clock 58 within the next timing window based on the counter 54 as shown in Figure 2.

The counter for the high resolution timing signals 64 is initialized by a low resolution timing signal 60. The low resolution timing signal is assumed to fall in the middle of a known timing window 62. The counter 64 begins as soon as the first low resolution timing signal is detected, in this case by a positive edge of the high frequency clock 68.

As shown in Figure 2, the timing system in the wireless transceiver is essentially a counter where maximum value of the counter is equal to the ratio between the low resolution timing signal and the high resolution timing signal in accordance with an embodiment. For example, in a multi-mode GSM/WCDMA system the timing requirement is 1/8^{th} of a chip period or about 32.5ns. The low resolution timing signal can provide a resolution of a chip period, about 260ns, by using the GSM system clock (clock period ~77ns) while the wireless transceiver produces a high frequency (30.72Mhz) clock synchronous to the WCDMA air interface which is used by the counter to produce the high frequency timing signal that is synchronous with the air interface. Under these conditions the counter will count between 0 and 7 so, eight times the resolution is provided.

Those skilled in the art will appreciate that numerous modifications and variations may be made to the above disclosed embodiment without departing from scope of the invention.

## Claims

1. A wireless communication system comprising a digital baseband processing system (18) wherein the wireless communication system includes a timing system, wherein the timing system comprises:
a primary clock generation system which comprises a single system clock (32) that provides a primary low frequency clock signal that is used as a reference clock signal for the digital baseband processing system (18);
**characterized in that**
the wireless communication system comprising a plurality of wireless transceivers (38, 40);
a digital baseband processing unit (20, 22) comprised in the digital baseband processing system that generates low resolution timing signals (34, 36, 50, 60) for each of the wireless transceivers (38, 40); and
a secondary clock generation system that provides each wireless transceiver (38, 40) with a secondary high frequency clock signal (58, 68) that is synchronous to its air interface and that is used by each wireless transceiver (38, 40) to produce high resolution timing signals (56, 66) to control its timing.

2. The wireless communication system as claimed in claim 1, wherein each wireless transceiver (38, 40) produces a secondary high frequency clock signal that is synchronous to its air interface and used to produce high resolution timing signals (56 66) to control its timing

3. The wireless communication system as claimed in 1, wherein said secondary high frequency clock signal is generated in the digital baseband processing unit (20, 22).

4. The wireless communication system as claimed in 1, wherein each wireless transceiver (38, 40) includes a separate radio frequency circuit (14, 28) and a separate analog baseband unit (16, 30).

5. The wireless communication system as claimed in 1, said secondary high frequency clock signal is generated in the digital baseband processing system (18).

6. The wireless communication system as claimed in claim 1, wherein said secondary high frequency clock signal (58, 68) is commenced based on the low resolution timing signal (34, 36, 50, 60).

7. The wireless communication system as claimed in claim 1, wherein said secondary high frequency clock signal generation system includes a counter (54, 64).

8. The wireless communication system as claimed in claim 1, wherein said secondary high frequency clock signal (56, 66) has a resolution of about 1/10^{th} of the resolution of said low frequency clock signal.

9. A method of operating a timing system for use in a wireless communication system and a digital baseband processing system (18), wherein said method comprises the steps of:
using a single system clock (32) to provide a primary low frequency clock signal that is used as a reference clock signal for the digital baseband processing system (18),
**characterized in that**
the wireless communication system that includes a plurality of wireless transceivers (38, 40) and the method comprises the steps of;
providing a digital baseband processing unit within the digital baseband processing system which generates low resolution timing signals (34,36,50,60),
and providing a secondary high frequency clock signal (58, 68) that is used by each wireless transceiver (38, 40) to produce a secondary high resolution timing signal (56, 66), said secondary high frequency clock signal (58, 68) being commenced responsive to one of said low resolution timing signal generated by the digital baseband processing unit.

10. The method as claimed in claim 9, wherein said secondary high resolution timing signals (56,66) are produced by each of said plurality of said wireless transceivers (38, 40).

11. The method as claimed in claim 9, wherein said secondary high resolution timing signals (56,66) are commenced based on said low resolution timing signal generated by the digital baseband processing system (18).

12. The method as claimed in claim 9, wherein the secondary timing systems 68 include a counter (54, 64).

13. The method as claimed in claim 9, wherein said secondary high resolution timing signals (56,66) have a resolution of about 1/10^{th} of the resolution of said first low resolution timing signal.

## Patentansprüche

1. Drahtloses Kommunikationssystem, umfassend ein digitales Basisband-Verarbeitungssystem (18), wobei das drahtlose Kommunikationssystem ein Zeitsystem einschließt, wobei das Zeitsystem umfasst:
ein primäres Taktgenerierungssystem, das einen einzelnen Systemtaktgeber (32) umfasst, der ein primäres niederfrequentes Taktsignal bereitstellt, das als ein Referenztaktsignal für das digitale Basisband-Verarbeitungssystem (18) verwendet wird,
**dadurch gekennzeichnet, dass**
das drahtlose Kommunikationssystem eine Mehrzahl drahtloser Sendeempfänger (38, 40) umfasst,
eine in dem digitalen Basisband-Verarbeitungssystem enthaltene digitale Basisband-Verarbeitungseinheit (20, 22), die niedrigauflösende Zeitsignale (34, 36, 50, 60) für jeden der drahtlosen Sendeempfänger (38, 40) generiert, und
ein sekundäres Taktgenerierungssystem, das jedem drahtlosen Sendeempfänger (38, 40) ein sekundäres hochfrequentes Taktsignal (58, 68) zuführt, das mit dessen Luftschnttstelle synchron ist und das von jedem drahtlosen Sendeempfänger (38, 40) verwendet wird, um hochauflösende Zeitsignale (56, 66) zu erzeugen, um dessen Taktung zu steuern.

2. Das drahtlose Kommunikationssystem nach Anspruch 1, wobei jeder drahtlose Sendeempfänger (38, 40) ein sekundäres hochfrequentes Taktsignal erzeugt, das mit dessen Luftschnittstelle synchron ist und verwendet wird, um hochauflösende Zeitsignale (56, 66) zu erzeugen, um dessen Taktung zu steuern.

3. Das drahtlose Kommunikationssystem nach Anspruch 1, wobei das sekundäre hochfrequente Taktsignal in der digitalen Basisband-Verarbeitungseinheit (20, 22) generiert wird.

4. Das drahtlose Kommunikationssystem nach Anspruch 1, wobei jeder drahtlose Sendeempfänger (38, 40) eine separate Funkfrequenzschaltung (14, 28) und eine separate analoge Basisbandeinheit (16, 30) einschließt.

5. Das drahtlose Kommunikationssystem nach Anspruch 1, wobei das sekundäre hochfrequente Taktsignal in dem digitalen Basisband-Verarbeitungssystem (18) generiert wird.

6. Das drahtlose Kommunikationssystem nach Anspruch 1, wobei das sekundäre hochfrequente Taktsignal (58, 68) auf der Basis des niedrigauflösenden Zeitsignals (34, 36, 50, 60) eingeleitet wird.

7. Das drahtlose Kommunikationssystem nach Anspruch 1, wobei das sekundäre Hochfrequenztaktsignal-Generierungssystem einen Zähler (54, 64) einschließt.

8. Das drahtlose Kommunikationssystem nach Anspruch 1, wobei das sekundäre hochfrequente Taktsignal (56, 66) eine Auflösung von etwa 1/10 der Auflösung des niederfrequenten Taktsignals aufweist.

9. Verfahren zum Betreiben eines Zeitsystems zur Verwendung in einem drahtlosen Kommunikationssystem und einem digitalen Basisband-Verarbeitungssystem (18), wobei das Verfahren die folgenden Schritte umfasst:
Verwenden eines einzelnen Systemtaktgebers (32) zum Bereitstellen eines primären niederfrequenten Taktsignals, das als ein Referenztaktsignal für das digitale Basisband-Verarbeitungssystem (18) verwendet wird,
**dadurch gekennzeichnet, dass**
das drahtlose Kommunikationssystem eine Mehrzahl drahtloser Sendeempfänger (38, 40) einschließt und das Verfahren die folgenden Schritte umfasst:
Bereitstellen einer digitalen Basisband-Verarbeitungseinheit innerhalb des digitalen Basisband-Verarbeitungssystems, die niedrigauflösende Zeitsignale (34, 36, 50, 60) generiert,
und Bereitstellen eines sekundären hochfrequenten Taktsignals (58, 68), das von jedem drahtlosen Sendeempfänger (38, 40) verwendet wird, um ein sekundäres hochauflösendes Zeitsignal (56, 66) zu erzeugen, wobei das sekundäre hochfrequente Taktsignal (58, 68) in Reaktion auf eines der von der digitalen Basisband-Verarbeitungsseinheit generierten niedrigauflösenden Zeitsignale eingeleitet wird.

10. Das Verfahren nach Anspruch 9, wobei die sekundären hochauflösenden Zeitsignale (56, 66) von jedem der Mehrzahl der drahtlosen Sendeempfänger (38, 40) erzeugt werden.

11. Das Verfahren nach Anspruch 9, wobei die sekundären hochauflösenden Zeitsignale (56, 66) auf der Basis des von dem digitalen Basisband-Verarbeitungssystem (18) generierten niederfrequenten Zeitsignals eingeleitet werden.

12. Das Verfahren nach Anspruch 9, wobei die sekundären Zeitsysteme einen Zähler (54, 64) einschließen.

13. Das Verfahren nach Anspruch 9, wobei die sekundären hochauflösenden Zeitsignale (56, 66) eine Auflösung von etwa 1/10 der Auflösung des ersten niedrigauflösenden Zeitsignals aufweisen.

## Revendications

1. Système de télécommunications sans fil comprenant un système de traitement numérique en bande de base (18) dans lequel le système de télécommunications sans fil inclut un système de synchronisation, le système de synchronisation comprenant :
un système de génération d'horloge primaire qui comprend une unique horloge système (32) qui fournit un signal d'horloge basse fréquence primaire qui est utilisé comme signal d'horloge de référence pour le système de traitement numérique en bande de base (18) ;
**caractérisé en ce que**
le système de télécommunications sans fil comprend une pluralité d'émetteurs-récepteurs sans fil (38, 40) ;
une unité de traitement numérique en bande de base (20, 22) incluse dans le système de traitement numérique en bande de base qui génère des signaux de synchronisation de faible résolution (34, 36, 50, 60) pour chacun des émetteurs-récepteurs sans fil (38, 40) ; et
un système de génération d'horloge secondaire qui fournit à chaque émetteur-récepteur sans fil (38, 40) un signal d'horloge haute fréquence secondaire (58, 68) qui est synchrone avec son interface radio et qui est utilisé par chaque émetteur-récepteur sans fil (38, 40) pour produire des signaux de synchronisation de haute résolution (56, 66) pour contrôler sa synchronisation.

2. Système de télécommunications sans fil selon la revendication 1, dans lequel chaque émetteur-récepteur sans fil (38, 40) produit un signal d'horloge haute fréquence secondaire qui est synchrone avec son interface radio et utilisé pour produire des signaux de synchronisation de haute résolution (56, 66) pour contrôler sa synchronisation.

3. Système de télécommunications sans fil selon la revendication 1, dans lequel ledit signal d'horloge haute fréquence secondaire est généré dans l'unité de traitement numérique en bande de base (20, 22).

4. Système de télécommuncations sans fil selon la revendication 1, dans lequel chaque émetteur-récepteur sans fil (38, 40) comprend un circuit radiofréquence séparé (14, 28) et une unité analogique en bande de base séparée (16, 30).

5. Système de télécommunications sans fil selon la revendication 1, dans lequel ledit signal d'horloge haute fréquence secondaire est généré dans le système de traitement numérique en bande de base (18).

6. Système de télécommunications sans fil selon la revendication 1, dans lequel ledit signal d'horloge haute fréquence secondaire (58, 68) débute sur la base du signal de synchronisation de faible résolution (34, 36, 50, 60).

7. Système de télécommunications sans fil selon la revendication 1, dans lequel ledit système de génération de signal d'horloge haute fréquence secondaire comprend un compteur (54, 64).

8. Système de télécommunications sans fil selon la revendication 1, dans lequel ledit signal d'horloge haute fréquence secondaire (56, 66) a une résolution correspondant à environ 1/10^{ème} de la résolution dudit signal d'horloge basse fréquence.

9. Procédé de fonctionnement d'un système de synchronisation à utiliser dans un système de télécommunications sans fil et un système de traitement numérique en bande de base (18), dans lequel ledit procédé comprend les étapes consistant à :
utiliser une unique horloge système (32) pour fournir un signal d'horloge basse fréquence primaire qui est utilisé comme signal d'horloge de référence pour le système de traitement numérique en bande de base (18),
**caractérisé**
**par** le système de télécommunications sans fil qui comprend une pluralité d'émetteurs-récepteurs sans fil (38, 40) et en ce que le procédé comprend les étapes consistant à :
fournir une unité de traitement numérique en bande de base au sein du système de traitement numérique en bande de base qui génère des signaux de synchronisation de faible résolution (34, 36, 50, 60),
et fournir un signal d'horloge haute fréquence secondaire (58, 68) qui est utilisé par chaque émetteur-récepteur sans fil (38, 40) pour produire un signal de synchronisation de haute résolution secondaire (56, 66), ledit signal d'horloge haute fréquence secondaire (58, 68) débutant en réponse à l'un desdits signaux de synchronisation de faible résolution générés par l'unité de traitement numérique en bande de base

10. Procédé selon la revendication 9, dans lequel lesdits signaux de synchronisation de haute résolution secondaires (56, 66) sont produits par chacun des émetteurs-récepteurs de la pluralité d'émetteurs-récepteurs sans fil (38, 40).

11. Procédé selon la revendication 9, dans lequel lesdits signaux de synchronisation de haute résolution secondaires (56, 66) débutent sur la base dudit signal de synchronisation de faible résolution généré par le système de traitement numérique en bande de base (18).

12. Procédé selon la revendication 9, dans lequel les systèmes secondaires de synchronisation comprennent un compteur (54, 64).

13. Procédé selon la revendication 9, dans lequel lesdits signaux de synchronisation de haute résolution secondaires (56, 66) ont une résolution correspondant à environ 1/10^{ème} de la résolution dudit premier signal de synchronisation de faible résolution.
